**Europäisches Patentamt**

(19) **European Patent Office**

**Office européen des brevets**

(11) Numéro de publication: **0 130 258**
**B1**

(12) **FASCICULE DE BREVET EUROPEEN**

(45) Date de publication du fascicule du brevet:
**10.12.86**

(51) Int. Cl.⁴: **A 01 F 15/00**

(21) Numéro de dépôt: **83401369.0**

(22) Date de dépôt: **04.07.83**

(54) **Presse à balles cylindriques.**

(43) Date de publication de la demande:
**09.01.85 Bulletin 85/2**

(45) Mention de la délivrance du brevet:
**10.12.86 Bulletin 86/50**

(84) Etats contractants désignés:
**DE FR GB IT NL**

(56) Documents cités:
**EP - A - 0 076 502**
**FR - A - 2 384 440**

(73) Titulaire: **JOHN DEERE (Société Anonyme), 20, Rue André Dessaux, F-45401 Fleury-les-Aubrais (FR)**

(72) Inventeur: **Viaud, Jean, Chargey-les-Gray, F-70100 Gray (FR)**

(74) Mandataire: **Pruvost, Marc Henri et al, Cabinet ORES 6, Avenue de Messine, F-75008 Paris (FR)**

ACTORUM AG

# Description

La présente invention concerne les presses à balles cylindriques.

Ces presses sont d'un type général bien connu et comprennent au moins un jeu de bandes ou courroies qui, par leur déplacement, forment par enroulement, à l'intérieur d'une chambre ménagée dans le corps de la presse, une balle de forme générale cylindrique à partir de produits de récolte, notamment de fourrage ou de foin, ramassés sur le champ au cours de la progression de la machine. Les balles ainsi formées sont, quand elles ont atteint un diamètre suffisant, liées à l'intérieur de la chambre de la presse, puis déchargées sur le sol par une porte arrière relevable.

Dans les presses existantes, le mouvement de la porte arrière est commandé par une paire de vérins disposés à raison d'un vérin de chaque côté de la machine. Ces vérins sont actionnés dans un sens, puis dans l'autre, pour assurer successivement l'ouverture de la porte en vue du déchargement de la balle formée et liée, puis la fermeture de cette porte en vue de la formation d'une nouvelle balle.

Pendant la formation de la balle et son augmentation de diamètre, le volume de la chambre ménagée entre les courroies ou jeux de courroies doit également augmenter. Cette augmentation de volume s'effectue par déplacement de certains des rouleaux de guidage des courroies, qui sont le plus souvent tourillonnés à leurs extrémités dans des bras prévus de chaque côté de la machine, à l'intérieur du corps. Pour assurer le maintien en tension des courroies, afin de comprimer la matière formant la balle par enroulement et d'obtenir ainsi une balle ayant la densité requise, évitant en conséquence l'éparpillement des produits de récolte malgré le liage quand la balle est déchargée sur le sol, il est connu de soumettre ces bras portant les rouleaux à une sollicitation ou à une résistance.

A cet effet, des bras latéraux disposés en dehors du corps de la presse sont soumis, suivant un mode de construction connu, à l'action de ressorts qui résistent ainsi au déplacement des bras portant les rouleaux de tension en maintenant en conséquence la tension voulue dans les courroies. Ces ressorts exercent également une action de rappel sur les bras précités quand la balle a été déchargée, afin de ramener ces bras dans une position correspondant à un volume minimum de la chambre au début de la formation d'une balle.

Il est également connu, dans les presses de ce type, de prévoir en combinaison avec ces ressorts, ou bien au lieu de ceux-ci, des vérins disposés de part et d'autre de la presse et montés entre les bras précités, associés aux bras portant les rouleaux, et un point fixe du corps de la presse. Pendant le stade de formation de la balle, ces vérins travaillent en circuit fermé, le liquide passant alors d'un côté à l'autre de leur piston par un circuit établissant une résistance appropriée. De ce fait, ces vérins freinent le déplacement des bras portant les rouleaux, en maintenant les courroies sous tension. Un montage hydraulique approprié desdits vérins permet également d'assurer le rappel des bras portant les rouleaux quand la balle a été déchargé si les ressorts du type précité ne sont pas prévus.

Les fonctions assurées par les vérins de commande de la porte arrière de la presse et les vérins de commande des bras portant les rouleaux de tension des courroies sont ainsi séparées, et deux circuits hydrauliques indépendants ou combinés sont nécessaires pour ces vérins (EP-A-0 076 502).

Le but de l'invention est de simplifier les constructions connues et de réaliser une presse à balles cylindriques ou rondes comportant un circuit hydraulique unique et ainsi simplifié à la fois pour la commande de la porte arrière de la presse et pour le maintien de la tension dans les courroies de la presse.

L'invention concerne en conséquence une presse à balles cylindriques ou rondes du type comportant au moins un jeu de bandes ou courroies délimitant, à l'intérieur de la presse, une chambre d'enroulement des produits de récolte pour la formation d'une balle cylindrique, ces bandes ou courroies passant sur des rouleaux de renvoi et de tension dont l'un au moins est porté par des bras pivotants latéraux, pour permettre un déplacement de ces rouleaux lors de l'augmentation de diamètre de la balle au cours de sa formation, et une porte arrière basculante par laquelle la balle formée est éjectée, les bras pivotant et la porte arrière était soumis à l'action d'un ou plusieurs vérins hdrauliques, caractérisée en ce qu'il est prévu, sur l'un au moins des côtés de la presse, un vérin hyraulique monté entre un point d'articulation prévu sur la porte arrière de la presse distinct de l'articulation de la porte, et un bras pivotant solidaire en rotation des bras portant le ou les rouleaux de tension des courroies, les chambres de ce vérin ménagées de part et d'autre de son piston étant reliées par des conduits à une source de liquide, des moyens étant prévus pour, sélectivement, isoler ce vérin de cette source de liquide pendant l'opération de formation de la balle tout en faisant communiquer ces conduits entre eux afin d'établir un circuit fermé entre les chambres du vérin, à travers une résistance, ou mettre ce vérin en communication avec la source de liquide pour la commande de la porte arrière de la presse.

Ainsi, les deux fonctions de maintien de la tension des courroies et de commande de la porte arrière de la presse sont réunies dans un même vérin ou une même paire de vérins (à raison dans ce cas d'un vérin de chaque côté de la presse), et un seul circuit hydraulique est requis, ce qui simplifie de manière importante le réalisation et réduit en conséquence le prix de revient.

Il est connu, sur les presses de ce type, de prévoir une butée pour les bras portant les rouleaux de tension des courroies, dans une position correspondant au diamètre désiré pour la balle terminée. On comprend que, dans le cas de l'agencement faisant l'objet de l'invention, cette butée limitant le mouvement de ces bras portant les rouleaux de tension définit ainsi la position d'une extrémité du vérin lors de son actionnement pour la commande d'ouverture de la porte arrière de la presse, cette extrémité prenant alors appui sur le bras associé en position de butée.

Suivant un mode de réalisation paraissant avantageux, il est prévu dans l'un des conduits reliant les chambres du vérin à la source de liquide, plus spécialement dans le conduit de refoulement du liquide à partir du corps du vérin pendant le déplacement des bras portant les rouleaux de tension au cours de la formation de la balle, un clapet anti-retour destiné à empêcher le retour du liquide vers le réservoir de la source de liquide, et une comminication est prévue entre les deux conduits dans une position située entre ce clapet anti-retour et le vérin.

Ainsi, le liquide s'écoulant à partir de la chambre correspondante du vérin est renvoyé vers l'autre chambre par cette communication. Un moyen formant la résistance, tel qu'une soupape réglable de décharge, un étranglement ou analogue, est alors prévu dans cette communication pour freiner le passage du liquide d'une chambre à l'autre du vérin, et ainsi le mouvement des bras portant les rouleaux de tension, en maintenant la tension requise dans les courroies.

Suivant une autre particularitél le clapet antiretour précité est un clapet piloté, et il est ouvert positivement lors de l'envoi de liquide sous pression par l'autre conduit pour la commande positive du vérin en vue de l'ouverture de la porte arrière de la presse.

Suivant une autre particularité encore, on peut prévoir entre les deux conduits précités, entre la source de liquide et le clapet anti-retour précité, une autre communication entre les deux conduits, une soupape de limitation de pression ou analogue étant prévue dans cette communication pour limiter la pression d'actionnement du vérin lors de la commande de fermeture de la porte arrière de la presse. On évite ainsi, par cette limitation de la pression d'actionnement du vérin, les accidents ou endommagements pouvant survenir si, par exemple, le conducteur n'a pas effectué la manœuvre requise pour dégager la balle éjectée sur le sol par rapport à la trajectoire de fermeture de la porte arrière.

On comprend que cette commande du vérin dans le sens de fermeture de la porte arrière rappelle en même temps les bras portant les rouleaux de tension des courroies dans la position correspondant au volume minimum de la chambre de la presse pour le début de la formation d'une balle.

Suivant une variante de réalisation, on peut prévoir dans le conduit de refoulement du liquide à partir du vérin un clapet anti-retour piloté ou un élément analogue, qui s'oppose normalement au retour du liquide depuis le vérin, en direction du réservoir de la source de liquide, dans le sens correspondant à la fermeture de la porte arrière de la presse. On évite ainsi une fermeture brusque et inattendue de la porte, et par conséquent les accidents, si par exemple une rupture se produit dans le conduit considéré. Lors de l'envoi de liquide sous pression pour commander volontairement la fermeture de la porte, la pression agit sur le clapet piloté pour provoquer son ouverture et permettre ainsi le retour du liquide vers le réservoir.

La source de liquide peut être constituée par une pompe et un réservoir prévus sur la presse ou sur le tracteur auquel cette presse est attelée, la pompe étant entraînée de toute manière désirée.

On comprend que, si un vérin monté de la manière précitée est prévu de chaque côté de la presse, les deux vérins sont alors montés hydrauliquement en parallèle.

La description qui va suivre, faite en regard du dessin annexé, donné à titre non limitatif, permettra de mieux comprendre l'invention.

La fig. 1 est une vue schématique de profil d'une presse à balles cylindriques ou rondes suivant l'invention, seuls les éléments de cette presse nécessaires à la compréhension de l'invention ayant été représentés.

La fig. 2 est une vuer analogue à la fig. 1, mais montrant la presse dans la position de déchargement de la balle, la porte arrière étant ouverte, le circuit hydraulique ayant été supprimé pour plus de clarté.

La fig. 3 est une vue partielle correspondant à une variante par rapport à la fig. 1.

La presse à balles cylindriques ou rondes représentée sur le dessin comprend de façon connue un corps 1 comportant une partie fixe 2 supportée par un châssis et munie à sa partie avant d'une flèche d'attelage 3 destinée à être attelée de manière habituelle à un tracteur. Le châssis est supporté à partir du sol par une paire de roues 4 et il porte un ramasseur indiqué en 5, qui est destiné à ramasser les produits de récolte, notamment le fourrage ou le foin, sur le sol pendant la progression de la machine, en vue de leur introduction dans la presse. Une porte arrière relevable 6 est, de façon connue, montée de manière à pouvoir pivoter à sa artie supérieure sur la partie fixe 2, autour d'un axe de pivotement indiqué schématiquement en 7.

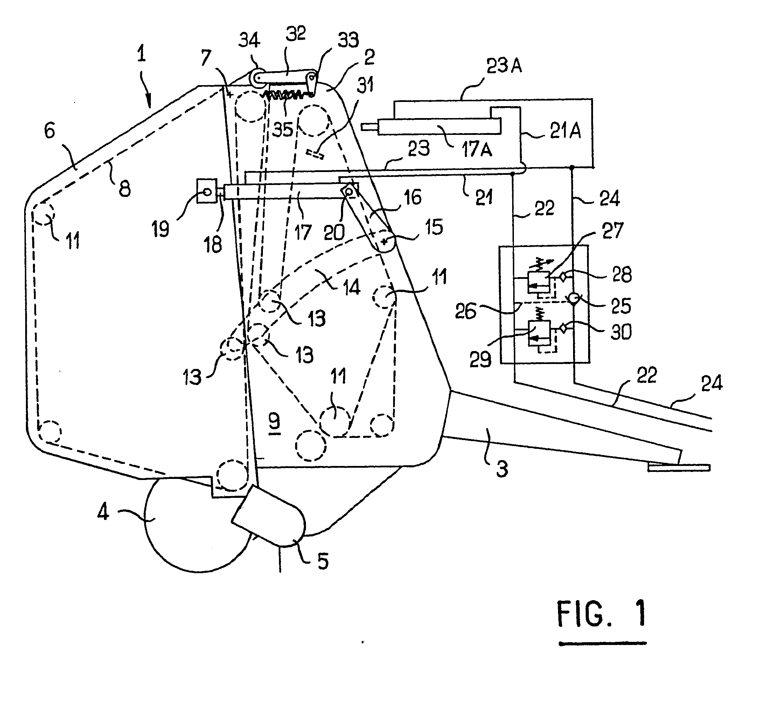

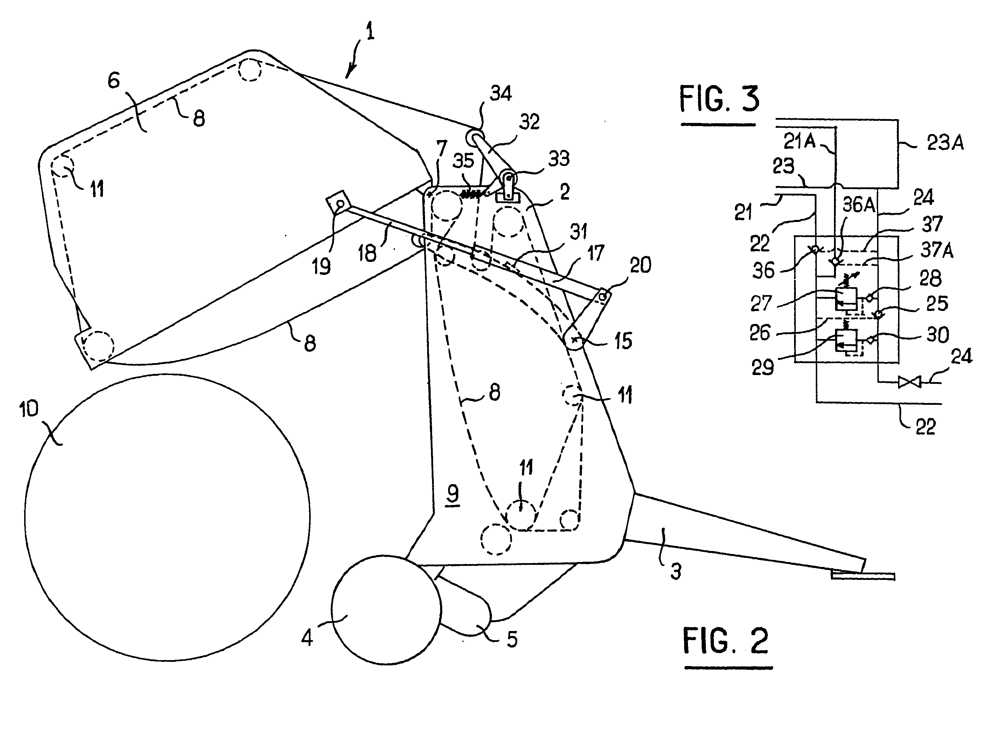

On a représenté sur les fig. 1 et 2 des courroies désignées dans leur ensemble par la référence 8, qui par leur action sur les produits de récolte assurent par enroulement la formation d'une balle à l'intérieur de la chambre 9 (fig. 1) de la presse. On a indiqué en 10 sur la fig. 2 une balle formée, déchargée à partir de la presse. Les courroies 8 passent sur un certain nombre de rouleaux de renvoi 11 prévus respectivement dans la partie fixe 2 et dans la porte arrière relevable 6 de la presse, ainsi que sur des rouleaux de tension 13 qui sont tourillonnés par leurs extrémités dans des bras latéraux 14 montés à l'intérieur du corps de la presse et pouvant pivoter autour d'un axe indiqué schématiquement en 15. Des bras extérieurs 16 pivotant également autour de l'axe 15 sont solidaires en rotation des bras intérieurs 14

Tous ces éléments de la presse à balles sont connus et, pour maintenir les courroies 8 sous tension afin d'assurer la compression des produits de récolte lors de la formation de la balle par enroulement, il est connu également de soumettre les bras 14 à une sollicitation ou à une résistance s'opposant à leur pivotement autour de l'axe 15 et ainsi à l'augmentation de volume de la chambre de la presse.

On décrira maintenant le circuit hydraulique qui fait plus spécialement l'objet de l'invention, en se reportant tout d'abord à la fig. 1.

Un vérin 17 est, comme montré, relié à une extrémité par sa tige de piston 18 à un point d'articulation 19 prévu sur la porte arrière relevable 6 de la presse et à son autre extrémité, par son corps ou cylindre, à un point d'articulation 20 prévu à l'extrémité du bras 16. Suivant le mode de réalisation représenté, une disposition semblable est prévue sur les deux côtés de la presse. Seul le second vérin a été indiqué schématiquement en 17A sur la fig. 1.

Une chambre des vérins 17, 17a est reliée par des

conduits 21, 21A à un conduit 22 du circuit hydraulique prévu suivant l'invention. L'autre chambre des vérins est reliée par des conduits 23, 23A à un autre conduit 24 de ce circuit hydraulique. Ces conduits 22, 24 sont reliés de leur côté à une source de liquide prévue sur le tracteur et qui peut comporter une pompe et un réservoir, ainsi que les moyens de commande habituels, ou qui peut être constituée par l'équipement hydraulique du tracteur, avec les valves de commande requises.

Un clapet anti-retour piloté 25 est, dans le cas du mode de réalisation représenté, prévu dans le conduit 24 du circuit hydraulique. On a indiqué en pointillé en 26 un conduit relié à l'autre conduit 22 et actionnant le clapet 25 pour son ouverture lors de la mise en pression de ce conduit 22 comme indiqué plus loin.

Un clapet réglable de décharge 27 associé à un filtre 28 est monté entre les deux conduits 24, 22, entre les vérins 17, 17a et le clapet anti-retour 25. Ce clapet 27 permet l'écoulement du liquide du conduit 24 vers le conduit 22 tout en exerçant une résistance, pour la raison indiquée plus loin.

Une soupape de limitation de pression 29 associée à un filtre 30 est prévue également entre les conduits 24, 22, entre le clapet anti-retour 25 et la source de liquide ou le tracteur. Cette soupape a pour fonction de limiter la pression d'actionnement des vérins pour la fermeture de la porte, comme indiqué plus loin.

On décrira maintenant le fonctionnement du circuit hydraulique représenté.

Pendant l'opération de formation de la balle à l'intérieur de la chambre 9 de la presse, aucune pression n'est transmise aux vérins 17, 17A à partir du tracteur. L'augmentation de diamètre de la balle au cours de sa formation tend à faire pivoter les bras 14 et ainsi les bras associés 16 autour de l'axe 15, et en conséquence à déplacer vers la droite (en regardant le dessin) le corps ou cylindre des vérins 17, 17A. Il en résulte que le liquide qui se trouve dans la chambre de ces vérins correspondant à la tige de piston 18, 18A tend à être refoulé par les conduits 23, 23A en direction du conduit 24, tandis qu'un appel de liquide est assuré dans l'autre chambre des vérins. Etant donné que le clapet anti-retour 25 s'oppose à l'écoulement du liquide par le conduit 24 vers le tracteur, ce liquide traverse le clapet 27 pour revenir aux vérins par le conduit 22 et les conduits 21, 21A. On voit ainsi que le système travaille en circuit fermé et que la résistance requise pour le maintien sous tension des courroies 8 est fournie par le clapet 27 prévu dans ce circuit.

Lors de leur relevage, les bras 14 viennent en fin de course s'appliquer contre une butée 31, prévue de façon connue sur la presse. Ceci limite le mouvement des bras 14, 16 dans la position indiquée sur la fig. 2 et immobilise en conséquence l'axe 20 et ainsi l'extrémité correspondante des vérins 17, 17A. Cette position est atteinte quand la balle présente le diamètre requis.

Après son liage, la balle doit être déchargée sur le sol. A cet effet, le conducteur du tracteur commande le relevage de la porte arrière 6 par pivotement autour de l'axe 7. Cette commande est assurée en envoyant du liquide depuis le tracteur, par le conduit 22, en direction des chambres des vérins 17, 17A opposées aux tiges de pistons 18, 18A. La pression du liquide agit alors par la liaison 26 sur le clapet anti-retour piloté 25, pour provoquer son ouverture. Le liquide sous pression provoque la sortie des tiges de pistons des vérins 17, 17A pour relever la porte 6 jusqu'à la position de déchargement indiqué sur la fig. 2.

On a montré sur les fig. 1 et 2 un levier coudé 32 pouvant pivoter sur la partie fixe 2 de la presse en 33 et portant à l'extrémité d'un de ses bras un rouleau de renvoi 34, tandis que son autre bras est soumis à la sollicitation d'un ressort de rappel 35. On comprendra qu'un levier de ce type est prévu de chaque côté de la presse comme visible sur la fig. 2. Lors du relevage de la porte 6, le ressort 35 agit pour faire basculer le levier 32 et compenser ainsi, au moyen du rouleau 34, le mou qui se produit dans les courroies 8.

Après le déchargement de la balle, l'opérateur commande la fermeture de la porte en inversant le flux de liquide dans les conduits 22, 24 c'est-à-dire en envoyant du liquide sous la pression par le conduit 24 et les conduits 23, 23A dans les chambres des vérins 17, 17A correspondant aux tiges de pistons. Le retour du liquide s'effectue alors par les conduits 21, 21A et 22.

La soupape de limitation de pression 29 intervient dans ce cas afin de limiter la pression agissant dans les vérins pour commander la fermeture de la porte, par court-circuitage de l'excès de pression entre les conduits 24 et 22. Ceci a pour but d'éviter les endommagements qui pouraient résulter d'une erreur de manœuvre du conducteur du tracteur, par exemple si celui-ci n'a pas effectué la manœuvre nécessaire pour dégager la presse par rapport à la balle reposant sur le sol.

On comprendra que ce rappel du piston des vérins 17, 17A ramène également les bras 16 et ainsi les bras 14 et les rouleaux de tension qu'ils portent dans une position correspondant à un volume minimum de la chambre de formation de la balle, comme cela est nécessaire. En outre, le levier 32 et les rouleaux 34 sont abaissés en antagonisme à l'action du ressort 35.

On a représenté sur la fig. 3 une variante de réalisation de l'invention, en limitant toutefois la représentation aux éléments modifiés par rapport au circuit hydraulique montré sur la fig. 1.

Cette variante comporte une sécurité évitant une fermeture accidentelle de la porte en cas de rupture de canalisations.

A cet effet, on a prévu dans les conduits 21, 21A, entre les vérins 17, 17A et le conduit 22, des clapets pilotés 36, 36A dont l'ouverture est commandée positivement par des conduits indiqués schématiquement en 37, 37A. Ainsi, quand la porte arrière 6 de la presse est en position ouverte, une rupture de canalisation ne permet pas le retour du liquide des vérins 17, 17A vers le tracteur, du fait de la présence des clapets 36, 36A, ce qui évite une retombée accidentelle de la porte. Par contre, quand une pression est envoyée par le conduit 24 pour commander positivement cette fermeture, cette pression agit par les conduits 37, 37A pour ouvrir les clapets 36, 36A et permettre ainsi cet écoulement en retour du liquide.

## Revendications

1. Presse à balles cylindriques ou rondes du type comportant au moins un jeu de bandes ou courroies (8) délimitant, à l'intérieur de la presse, une chambre (8) d'enroulement des produits de récolte pour la formation d'une balle cylindrique (10), ces bandes ou courroies passant sur des rouleaux de renvoi (11) et de tension (13) dont l'un au moins est porté par des bras pivotants latéraux (14), pour permettre un déplacement de ces rouleaux lors de l'augmentation de diamètre de la balle au cours de sa formation, et une porte arrière basculante (6) par laquelle la balle formée est éjectée, les bras pivotants et la porte arrière étant soumis à l'action d'un ou plusieurs vérins hydrauliques, caractérisée en ce qu'il est prévu, sur l'un au moins des côtés de la presse, un vérin hydraulique (17, 17A) monté entre un point d'articulation (19) prévu sur la porte arrière (6) de la presse distinct de l'articulation de cette porte, et un bras pivotant (16) solidaire en rotation des bras (14) portant le ou les rouleaux (13) de tension des courroies (8), les chambres de ce vérin ménagées de part et d'autre de son piston étant reliées par des conduits (21, 21A, 23, 23A, 22, 24) à une source de liquide, des moyens étant prévus pour, sélectivement, isoler ce vérin de cette source de liquide pendant l'opération de formation de la balle, tout en faisant communiquer ces conduits entre eux afin d'établir un circuit fermé entre les chambres du vérin, à travers une résistance (27), ou mettre ce vérin en communication avec la source de liquide pour la commande de la porte arrière de la presse.

2. Presse à balles suivant la revendication 1, caractérisée en ce qu'il est prévu un vérin (17) d'un seul côté de la presse.

3. Presse à balles suivant la revendication 1, caractérisée en ce qu'il est prévu un vérin (17, 17A) de chaque côté de la presse.

4. Presse à balles suivant l'une quelconque des revendications précédentes, caractérisée en ce qu'une butée (31) limite le pivotement des bras (14) portant le ou les rouleaux de tension (13) ou du bras (16) relié angulairement à eux quand la balle (10) a atteint le diamètre requis, afin d'immobiliser l'extrémigé du verin (17, 17A) reliée à ce bras (16).

5. Presse à balles suivant l'une quelconque des revendications précédentes, caractérisée en ce qu'il est prévu, dans l'un des conduits (22, 24) reliant les chambres du vérin à la source de liquide, plus spécialement dans le conduit (24) de refoulement du liquide à partir du corps ou cylindre du vérin (17, 17A) pendant le déplacement des bras (14) portant les rouleaux de tension (13) au cours de la formation de la balle, un clapet anti-retour (25) destiné à empêcher le retour du liquide vers le réservoir de la source de liquide, et en ce qu'une communication (27, 28) est prévue entre les deux conduits (22, 24) dans une position située entre ce clapet anti-retour et le vérin.

6. Presse à balles suivant la revendication 5, caractérisée en ce que le moyen formant résistance tel qu'une soupape réglable de décharge (27), un étranglement ou analogue est prévu dans cette communication (27, 28).

7. Presse à balles suivant la revendication 5 ou 6, caractérisée en ce que le clapet anti-retour (25) est un clapet piloté et en ce que des moyens (26) sont prévus pour assurer son ouverture positive lors de l'envoi de liquide par l'autre conduit (22) pour la commande positive du vérin (17, 17A) en vue de l'ouverture de la porte arrière (6) de la presse.

8. Presse à balles suivant la revendication 5, caractérisée en ce qu'il est prévu entre les deux conduits (22, 24), entre la source de liquide et le clapet anti-retour (25), une autre communication (29, 30) entre les deux conduits, une soupape de limitation de pression (29) ou analogue étant prévue dans cette communication pour limiter la pression d'actionnement du vérin (17, 17A) lors de la commande de fermeture de la porte arrière (6) de la presse.

9. Presse à balles suivant l'une quelconque des revendications précédentes, caractérisée en ce qu'il est prévu, dans le conduit (21, 21A) de refoulement du liquide à partir du vérin un clapet anti-retour piloté (36, 36A) ou un élément analogue qui s'oppose normalement au retour du liquide depuis le vérin (17, 17A) en direction du réservoir de la source de liquide, dans le sens correspondant à la fermeture de la porte arrière (6) de la presse.

10. Presse à balles cylindriques suivant la revendication 1 ou l'une quelconque des revendications 3 à 9, caractérisée en ce que, lorsqu'un vérin (17, 17A) est prévu de chaque côté de la presse, ces deux vérins sont montés en parallèle par rapport au circuit hydraulique comprenant les conduits (22, 24) reliés à la source de liquide.

## Patentansprüche

1. Presse für zylindrische oder runde Ballen des Typs, der wenigstens einen Satz Bänder oder Riemen (8) aufweist, die im Inneren der Presse eine Kammer (9) zum Aufwicken von Ernteprodukten zur Bildung eines zylindrischen Ballens (10) begrenzen, wobei diese Bänder oder Riemen über Antriebsrollen (11) und Spannrollen (13) laufen, von denen wenigstens eine durch seitliche Schwenkarme (14) getragen wird, um eine Verstellung dieser Rollen zu gestatten, wenn sich der Durchmesser des Ballens im Laufe seiner Bildung vergrössert, und der ein rückwärtiges schwenkbares Tor (6) aufweist, durch das der gebildete Ballen ausgeworfen wird, wobei die Schwenkarme und das rückwärtige Tor der Wirkung eines oder mehrerer hydraulischer Zylinder unterworfen sind, dadurch gekennzeichnet, dass wenigstens auf einer Seite der Presse ein hydraulischer Zylinder (17, 17A) vorgesehen ist, der zwischen einem Schwenkpunkt (19), der auf dem rückwärtigen Tor der Presse vorgesehen und für das Schwenken des Tors bestimmt ist, und einem Schwenkarm (16), der drehfest mit den Armen (14) verbunden ist, welche die eine oder mehrere Spannrollen (13) für die Riemen (8) tragen, montiert ist, wobei die Kammern des Zylinders, die beiderseits seines Kolbens vorgesehen sind, durch Leitungen (21, 21A, 23, 23A, 22, 24) mit einer Flüssigkeitsquelle verbunden sind, wobei Mittel vorgesehen sind, um selektiv den Zylinder von der Flüssigkeitsquelle während des Vorganges der Bildung des Ballens zu isolieren, indem man die Leitungen miteinander kommunizieren lässt, um einen geschlossenen Kreis zwischen den Kammern des Zylinders herzustellen, und zwar über einen Widerstand (27), oder indem man den Zylinder mit der Flüssigkeitsquelle in Verbindung bringt, um das rückwärtige Tor der Presse zu steuern.

2. Ballenpresse nach Anspruch 1, dadurch gekennzeichnet, dass ein Zylinder (17) auf nur einer Seite der Presse vorgesehen ist.

3. Ballenpresse nach Anspruch 1, dadurch gekennzeichnet, dass ein Zylinder (17, 17A) auf jeder Seite der Presse vorgesehen ist.

4. Ballenpresse nach irgendeinem der voranstehenden Ansprüche, dadurch gekennzeichnet, dass ein Anschlag (31) die Schwenkung der Arme (14), welche die eine oder die mehreren Spannrollen (13) tragen, oder des Armes (16) begrenzt, der mit diesen winkelförmig verbunden ist, wenn der Ballen (10) den erforderlichen Durchmesser erreicht hat, um das Ende des Zylinders (17, 17A), das mit dem Arm (16) verbunden ist, festzulegen.

5. Ballenpresse nach irgendeinem der voranstehenden Ansprüche, dadurch gekennzeichnet, dass in einer der Leitungen (22, 24), welche die Kammern des Zylinders mit der Flüssigkeitsquelle verbinden, insb. in der Leitung (24) zum Stauen der Flüssigkeit vom Körper oder Gehäuse des Zylinders (17, 17A) während der Verstellung der Arme (14), welche die Spannrollen (13) im Verlaufe der Bildung der Ballens tragen, ein Rückschlagventil (25) vorgesehen ist, das dazu bestimmt ist, ein Rückfliessen der Flüssigkeit zum Reservoir der Flüssigkeitsquelle zu verhindern, und dass eine Verbindung (27, 28) zwischen den beiden Leitungen (22, 24) in einer Stellung vorgesehen ist, die zwischen dem Rückschlagventil und dem Zylinder gelegen ist.

6. Ballenpresse nach Anspruch 5, dadurch gekennzeichnet, dass die Mittel, welche den Widerstand bilden, wie ein regelbares Entladeventil (27), eine Drossel oder dergleichen, in dieser Verbindung (27, 22) vorgesehen sind.

7. Ballenpresse nach Anspruch 5 oder 6, dadurch gekennzeichnet, dass das Rückschlagventil (25) ein vorgesteuertes Ventil ist und dass Mittel (26) vorgesehen sind, um sein positives Öffnen während der Förderung der Flüssigkeit durch die andere Leitung (22) sicherzustellen, um positiv den Zylinder (17, 17A) im Hinblick eines Öffnens des rückwärtigen Tors (6) der Presse zu steuern.

8. Ballenpresse nach Anspruch 5, dadurch gekennzeichnet, dass zwischen den beiden Leitungen (22, 24) zwischen der Flüssigkeitsquelle und dem Rückschlagventil (25) eine weitere Verbindung (29, 30) zwischen den beiden Leitungen vorgesehen ist, wobei ein Druckbegrenzungsventil (29) oder dergleichen in dieser Verbindung vorgesehen ist, um den Wirkungsdruck des Zylinders (17, 17A) während der Steuerung des Schliessens des rückwärtigen Tors (6) der Presse zu begrenzen.

9. Ballenpresse nach irgendeinem der voranstehenden Ansprüche, dadurch gekennzeichnet, dass in der Leitung (21, 21A) zum Stauen der Flüssigkeit vom Zylinder ein vorgesteuertes Rückschlagventil (36, 36A) oder ein analoges Element vorgesehen ist, das sich normalerweise einem Rückfluss der Flüssigkeit vom Zylinder (17, 17A) in Richtung zum Reservoir der Flüssigkeitsquelle entgegensetzt, in einem Sinne entsprechend dem Schliessen des rückwärtigen Tores (6) der Presse.

10. Presse für zylindrische Ballen nach Anspruch 1 oder irgendeinem der Ansprüche 3 bis 9, dadurch gekennzeichnet, dass dann, wenn ein Zylinder (17, 17A) auf jeder Seite der Presse vorgesehen ist, diese beiden Zylinder in bezug auf den hydraulischen Kreis angeordnet sind, der die Leitungen (22, 24) aufweist, die mit der Flüssigkeitsquelle verbunden sind.

**Claims**

1. A rotary baler for making cylindrical or round bales, of the type comprising at least one set of bands or belts (8) defining, within the baler, a chamber (9) for winding the harvested products to form a cylindrical bale (10), these bands or belts passing over return (11) and tightening (13) rollers at least one of which is carried by lateral pivoting arms (14) to allow displacement of these rollers as the diameter ot the bale increases during its formation, and a tiltable rear door (6) through which the formed bale is ejected, the pivoting arms and the rear door being subjected to the action of one or more hydraulic jacks, characterized in that there is provided, on at least one side of the baler, a hydraulic jack (17, 17A) mounted between a hinge point (19) provided on the rear door (6) of the baler and distinct from the hinges of this door and a pivoting arm (16) connected to and for rotation with the arms (14) carrying the roller or rollers (13) for tightening the belts (8), the chambers of this jacks, arranged each side of its piston, being connected via channels (21, 21A, 23, 23A, 22, 24) to a source of liquid, means being provided for, selectively, isolating this jack from this source of liquid during the bale formation operation while allowing the channels to communicate with each other through a resistance (27) so as to create a closed circuit between the jack chambers, or for putting this jack into communication with the source of liquid to control the rear door of the baler.

2. A rotary baler according to claim 1, characterized in that a jack (17) is provided on only one side of the baler.

3. A rotary baler according to claim 1, characterized in that a jack (17, 17A) is provided on each side of the baler.

4. A rotary baler according to any one of the preceding claims, characterized in that a stop (31) limits the pivoting of the arms (14) carrying the tightening roller or rollers (13) or for the arm (16) connected angularly to them when the bale (10) reaches the required diameter, so as to immobilize the end of the jack (17, 17A) connected to this arm (16).

5. A rotary baler according to any one of the preceding claims, characterized in that a non-return valve (25) intended to prevent the return of the liquid towards the liquid source reservoir is provoded in one of the channels (22, 24) connecting the jack chambers to the source of liquid, and more particularly in the channel (24) for back-flow of the liquid from the body or cylinder of the jack (17, 17A) during displacement of the arms (14) carrying the tightening rollers (13) while the bale is being formed, and in that a connection (27, 28) is provided between the two channels (22, 24) in a position located between this non-return valve and the jack.

6. A rotary baler according to claim 5, characterized in that the resistance creating means such as an adjustable discharge valve (27), throttle or the like, is provided in this connection (27, 22).

7. A rotary baler according to claim 5 or claim 6, characterized in that the non-return valve (25) is a pilot-controlled valve and in that means (26) are provided for ensuring its positive opening when liquid is sent through the other channel (22) for the positive control of the jack (17, 17A) with a view to opening the rear door (6) of the baler.

8. A rotary baler according to claim 5, characterized in that another connection (29, 30) is provided between the two channels (22, 24) between the source of liquid and the non-return valve (25), a pressure limiting valve (29) or the like being provided in this connection to limit the pressure actuating the jack (17, 17A) when the rear door (6) of the baler is ordered to close.

9. A rotary baler according to any one of the preceding claims, characterized in that a pilot-controlled non-return valve (36, 36A) or similar member is provided in the back-flow channel (21, 21A) for the liquid from the jack, which valve normally opposes the return of the liquid from the jack (17, 17A) towards the liquid source reservoir in the direction corresponding to the closure of the rear door (6) of the baler.

10. A rotary baler according to claim 1 or any one of claims 3 to 9, characterized in that when a jack (17, 17A) is provided on each side of the baler these two jacks are mounted in parallel with respect to the hydraulic circuit comprising the channels (22, 24) connected to the source of liquid.

0 130 258

FIG. 1

FIG. 3

FIG. 2

0 130 258